# EUROPEAN PATENT APPLICATION

(11) **EP 4 303 515 A1**
(43) Date of publication of application: **10.01.2024**
(21) Application number: 22183881.6
(22) Date of filing: 08.07.2022
(51) Int. Cl.: F27B 7/36, F27D 7/02, F27D 17/00, C04B 7/47

(54) **METHOD FOR MANUFACTURING CEMENT CLINKER**

(71) Applicant: Heidelberg Materials AG, 69120 Heidelberg (DE)
(72) Inventor: Federhen, Stefan, 69120 Heidelberg (DE); Majchrowicz, Marek, 69120 Heidelberg (DE)
(74) Representative: Zellentin & Partner mbB Patentanwälte

(57) **Abstract**

Method for manufacturing cement clinker comprising the steps: providing a raw meal; preheating the raw meal in a preheater (1); calcining the preheated raw meal in a calciner (2); burning the preheated, calcined raw meal in a kiln (3) to obtain the cement clinker (c); cooling the cement clinker (c) in a clinker cooler (4); separating an off-gas from the preheater (1) into a carbon dioxide gas stream (f) and a by-product gas stream (e) in a CO₂ purification unit (5), wherein the by-product gas stream (e) is used as cooling medium (a) in the clinker cooler (4) and/or as replacement of air in a kiln burner.

## Description

The present invention relates to a method and to adapted devices for manufacturing cement clinker.

As many other industries, the cement sector faces the important challenge to reduce its CO₂ emissions, above all those from the production of clinker, to comply with the commitments of the Paris Agreement. Established measures to reduce emission are increase of energy efficiency, utilizing alternative fuels and/or raw materials, and lower clinker to cement ratio, i.e. using supplementary cementitious materials to replace clinker in cements. Further, many proposals for alternative cements exist like geopolymer cement, belite cement made by hydrothermal treatment and binders hardening by reaction with carbon dioxide instead of or in addition to hydration. The potential of further reduction achievable with the established measures is very low and alternative cements still need lots of development activity and time to be accepted as replacement for ordinary Portland cement(abbreviated OPC) and OPC based composite cements in the construction sector.

Thus, other approaches need to be evaluated. An instructive overview of the current aproaches in carbon dioxide emmission reduction in cement manufacturing can be found in IEA Environmental Projects Ltd. "Deployment of CCS in the cement industry", report 2013/9 from Dec. 2013.

Accordingly, one promising way to achieve further CO₂ emmission reduction is by the implementation of carbon capture technologies. These technologies are innovative methods, many of them still in development, to obtain an almost pure carbon dioxide stream from the plant off-gases that can be later stored in geological formations or used in making new products. A problem encountered with this approach is to obtain an off-gas with high carbon dioxide content. A recently developped approach uses oxycombustion, i.e. a combustion in oxygen and typically also recirculated exhaust gas instead of air. The report mentioned before and M. Gimenez et al. "The oxycombustion option", Int. Cement Review May 2014 describe evaluations of oxyfuel calcination for making cement clinker. However, as can be seen from the report on CCS mentioned before the exhaust gas still needs purification and carbon dioxide content is in the range from 80 to 85 Vol.-%, see e.g. table 5-19 on page 89. The same problem multiplied by still lower carbon dioxide content occurs for non-oxyfuel devices. A CO₂ purification step is usually a solution if the CO₂ concentration in the exit gases of the clinker production unit does not fulfill the requirements for CO₂ transportation, geological storage, or utilization.

Typically, an exhaust gas is subjected to several known purification steps, especially dedusting and removal of NOₓ and SOₓ, before entering a carbon dioxide purification unit (abbreviated CPU herein). The CPU usually comprises several steps like multi-stage compression, cooling, distillation, absorption, and desorption, among others, to separate an essentially pure CO₂ stream from the exhaust gas stream. Besides the essentially pure CO₂ stream a by-product or vent gas stream results, whose CO₂ concentration can range from 30 - 60 Vol.% depending on the efficiency of the CO₂ purification technology. Typical further components of this by-product gas stream are oxygen, nitrogen, CO as well as traces of other compounds. Up to now there is no established beneficial use for the by-product gas stream generated in the CPU so it is vented. However, venting the by-product gas stream via the stack emits considerable amounts of carbon dioxide and may also be problematic due to the further components in the by-product gas stream.

It has now surprisingly been found that this CPU by-product gas is suitable to replace air in the clinker burning process as cooling gas in the clinker cooler, as a cooling media of the bypass gas or as a primary gas in the burner. Thereby, almost no carbon dioxide is vented and also other constituents of the by-product gas stream are kept in the loop until properly removed via the standard exhaust gas purification steps.

Therefore, the problem of improving on carbon dioxide foot step of cement clinker manufacturing is solved by a method for manufacturing cement clinker comprising the steps
- providing a raw meal
- preheating the raw meal in a preheater
- calcining the preheated raw meal in a calciner
- burning the preheated, calcined raw meal in a kiln to obtain the cement clinker
- cooling the cement clinker in a clinker cooler
- separating an off-gas from the preheater into a carbon dioxide gas stream and a by-product gas stream in a CO₂ purification unit
wherein the by-product gas stream is used as a cooling medium for the bypass gas and/or the clinker in the cooler and/or as replacement of air in a kiln burner. Preferably, for using the by-product gas stream as cooling medium the method further comprises
- withdrawing, as a bypass gas, part of a kiln exhaust gas
- quenching the bypass gas in a mixing unit using a quenching gas, preferably also separating dust contained in the bypass gas in an exhaust gas cleaning unit, wherein the by-product gas stream from the CO₂ purification unit forms a part or all of the the quenching gas, and
- introducing the quenched bypass gas in the clinker cooler as cooling medium. The problem is also solved by a cement clinker manufacturing plant comprising a preheater, a calciner, a rotary kiln, a clinker cooler, a CO₂ purification unit, a first gas line connecting the CO₂ purification unit with a mixing unit for passing a by-product gas stream from the CO₂ purification unit to the mixing unit, means for withdrawing a part of the kiln exhaust gas as a bypass gas and a second gas line connecting the means for withdrawing with the mixing unit to pass bypass gas to the mixing unit, wherein the mixing unit is adapted to quench the bypass gas with the by-product gas stream, and wherein a third gas line connects the mixing unit with the clinker cooler to pass the quenched bypass gas into the clinker cooler as cooling medium, preferably via a dedusting unit. The problem is also solved by a cement clinker manufacturing plant comprising a preheater, a calciner, a rotary kiln, a clinker cooler, a CO₂ purification unit, and a gas conduit connecting the CO₂ purification unit with the rotary kiln for passing a by-product gas stream from the CO₂ purification unit to a kiln burner as replacement of air or oxygen.

As a result, the present invention renders the by-product gas stream derived from the incorporation of carbon capture technologies in the clinker production process useful. In the frame of the present invention, this by-product gas stream is rerouted to the clinker burning process, either mixed with by-pass gas in a mixing unit and then back to the clinker recuperation zone or directly into the clinker cooler recuperation zone or in the kiln burner with the following advantages:
- Re-burning of non-condensable gaseous pollutants otherwise emitted to the atmosphere or needing to be treated in a secondary step.
- Reduction of cooling air demand for the kiln bypass gas.

This approach is advantageous for oxyfuel plants and for conventional plants using air for combustion. The method and devices according to the invention mostly rely on known concepts for cement clinker manufacturing. In other words, the cement plant is modified as little as possible, to save investment cost and avoid possibly problematic changes to the process. Since a cyclone preheater and rotary kiln are currently the most efficient setup those will normally be used. However, the concept can also be applied to other devices. Furthermore, in addition some of the established measures to save carbon dioxide emissions can and will typically be applied when manufacturing cement clinker according to the invention. The same applies if other measures are found or proposals developped to be ready for using in industrial practice. Also, known measures for exhaust gas purification can and will usually be used.

The method for manufacturing cement starts with the usual raw meal preparation to provide a raw meal comprising the desired components and particle size distribution suitable for the specific device. As usual the raw meal is provided by crushing and grinding quarried raw materials, eventually also admixing alternative raw materials, correctives and/or fluxes/mineralizers. Depending on the balance between mill output and kiln throughput a silo for storing raw meal can be foreseen. Such a silo can also be useful for homogenization of the raw meal and is then used regardless of a need to store raw meal. As known per se, exhaust gas withdrawn from the preheater and/or calciner and/or kiln and/or clinker cooler can be used to dry raw materials before they enter the mill. The exhaust gas can also pass through the mill. Thereby components like sulfur compounds, chlorides and/or alkali metal salts are at least partly absorbed onto the raw material and raw meal, respectively, removing them from the exhaust gas.

According to the invention, raw meal is first preheated, usually in a cyclone preheater. Typically, 2, 3, 4, 5 or 6 cyclones are used, preferably 3 to 5. Feeding raw meal to the preheater and preheating can take place as usual. When the plant is operated in oxyfuel mode, one part of the preheater is separated with regard to gas flow from a second part, so that not only solids but also gas can circulate between the second part of the preheater and the calciner. It is further possible to use two preheater strings, one connected to the oxyfuel pre-calcination according to the invention and a second one to manufacture cement according to the prior art without oxyfuel calcination.

Preheated raw meal is then precalcined in a section of the preheater or more often in a calciner fed with fuel and combustion gas. When using an oxyfuel calciner the solids, i.e. the fresh pre-heated raw meal and circulating raw meal, as well as fuels are fed as usual, but the combustion atmosphere is made up of oxygen and typically also circulating calciner exhaust gas. Thereby, no nitrogen is diluting the calciner exhaust gas, which reduces investment and energy costs for CO₂ purification, including for the removal of NOₓ (abbreviation for NO and NO₂) possibly formed from nitrogen.

The fuel for the calciner can be any known suitable fuel, for example natural gas, syngas, oil, coal, secondary fuels (i.e. refuse based fuels) and mixtures thereof.

The precalcined raw meal is then passed into the kiln for sintering it to obtain the cement clinker. The normally used rotary kiln is operated as usual, i.e. typically with air or with oxygen enriched circulating exhaust gas from the clinker cooler for burning the kiln fuel at one end and the pre-calcined raw meal slowly advancing from the other. The fuel used in the kiln burner is not critical, all known fuels can be used, for example natural gas, syngas, oil, coal, secondary fuels and mixtures thereof. Hot exhaust gas from the kiln is utilized for preheating and can be used for drying raw materials as known. If a second preheater string with or without calciner is used, it can also be used for preheating and/or pre-calcination there.

The cooler for cooling the cement clinker can be any known cooler, preferably a grate cooler is used. Therein, the clinker is contacted with a cooling medium. According to the prior art the cooling medium is air often mixed with gas recirculated within the cement manufacturing, e.g. off-gas from the preheating and/or bypass gas separated from the kiln exhaust gas. In full oxyfuel mode oxygen is fed instead of air and recirculated gas must be used. Further, the cooling medium is often fed at several points. It is also usual to feed the combustion air or oxygen for the kiln burner through the cooler. Furthermore, hot gas from the cooler can be utilized as so-called tertiary air, i.e. passed from the cooler into the preheater and/or calciner. Herein, the term tertiary air covers the mixture of oxygen and recirculating exhaust gas with which air (with or without recirculating gas) is replaced in oxyfuel mode.

According to one preferred embodiment of the invention the by-product gas stream is used as cooling medium in the clinker cooler. For this, a part of the kiln exhaust gas is separated off as bypass gas and mixed with the by-product gas stream functioning as quenching gas in a mixing unit. Preferably, the quenched bypass gas is passed into an dedusting unit for dedusting and concurrently removing pollutants with a cyclic behavior. As known per se, raw materials and fuels can and mostly do contain acidic compounds from sulfur, chloride, etc. and alkali metal salts that vaporize in the kiln and need to be removed from circulating gas to avoid that undue concentrations thereof build-up in the gas. The bypass gas is typically mixed with air (or oxygen for oxyfuel kilns) and the by-product gas stream from the CPU as will be described later. Typically, 2 - 8 Vol.-% of the kiln exhaust gas is by-passed. Typically this bypass gas has a temperature of 900 - 1200 °C depending on the fuel, oxidizer (air, oxygen or a gas mixture containing oxygen) and extraction location.

The kiln exhaust gas not taken off as bypass gas flows through the calciner and/or preheater, optionally also through the mill and/or raw material feed, and is then treated as usual. Typically, a dedusting takes place. NO and NO₂ are normally reduced in the presence of NH₃ or a compound releasing it in a catalytic or non-catalytic reactor. Volatile organic compounds are usually burned down to CO₂. SOₓ (i.e. SO₂ and/or SO₃) is adsorbed on the raw meal during preheating and/or on the raw material when the gas is used for drying it. Additionally or alternatively it can be scrubbed from the gas with known scrubbing devices. Such cleaning steps can take place in several units arranged at different points and/or subsequently. It is also possible and often suitable to combine two or more of them in one exhaust gas cleaning unit.

According to the invention the plant comprises a carbon dioxide purification unit wherein carbon dioxide is separated from other constituents of the exhaust gas from the preheater, calciner, kiln and/or cooler, if applicable after passing through the mill and/or being utilized for drying raw materials and/or being utilized for drying fuels and/or after known exhaust gas cleaning steps, to provide a carbon dioxide stream of essentially pure carbon dioxide. The remainder of the exhaust gas is the by-product gas stream hitherto usually vented.

As a first step the exhaust gas is typically cleaned as known for its release through the plant stack. Usually a dedusting at high temperatures is foreseen. The temperature level can be reduced by heat extraction before or after dedusting and/or other gas cleaning steps. If needed, NOₓ is typically reduced in the presence of NH₃ or a compound releasing it in a catalytic or non-catalytic reactor at 300 to 400 °C. An additional oxidation catalyst can be foreseen, either separately or combined with a catalytic NOₓ reducing, to burn down the carbon monoxide and remaining hydrocarbons to CO₂ when needed. The minimum oxygen content for this is 1 mol-%, ideally 1.5 mol-%. The gas can be purified from acid components such as SO₂, SO₃, HF, HCI, etc., usually in a scrubber, preferably in a wet scrubber. A final gas cleaning can be achieved in a direct contact cooler by adding an absorbent such as NaOH or KOH to collect the remainder of the SOₓ, HCI and HF to obtain a level of them around the limit of detection. However, since several of those steps can also be foreseen in the CO₂ purification unit which is a part of the plant according to the invention, the exhaust gas can also be transferred directly into the CO₂ purification unit.

In a preferred embodiment, the exhaust gas is fed into a condenser arranged in front of or as part of the CO₂ purification unit, either with or without having been subjected to one or more usual exhaust gas cleaning steps as described previously. In the condenser the water is removed by direct or indirect contact with a cooling medium, typically water or air, and the gas temperature is reduced. Usual temperatures of the exhaust gas leaving the condenser range from 20 to 40 °C. Then the gases move forwards within or are introduced into the CO₂ purification unit, which typically comprises one or more of the following units: single or multi-stage compression, inter-cooling, distillation, and/or absorption and desorption to separate an essentially pure CO₂ stream from the exhaust gas stream. An overview of CPU systems applied in oxyfuel processes can be found in "Oxy-combustion CPU - From pilot towards industrial-scale demonstration" by Lockwood et al in Energy Procedia 63 (2014) 342-351. The specific steps applied in the CPU are not critical for the method and device according to the present invention. Any unit or process providing an essentially pure carbon dioxide stream and a by-product stream containing most of the impurities, e.g. > 90 Vol.-% or > 95 Vol.-% or > 99 Vol.-% of them, is suitable.

Thereby, purified carbon dioxide, e.g. with at least 90 Vol.-% or 95 Vol.-% or 99.9 Vol.-% CO₂, and a by-product gas stream are obtained. The by-product gas stream usually has a temperature from 5 to 60 °C, often from 5 to 15 °C, and contains from 10 to 60 Vol.-%, often from 30 to 60 Vol.-% carbon dioxide. It mostly also contains varying amounts of one or more of oxygen, nitrogen, CO and trace gases found in air or the combustion gas used. If gaseous fuels are used the by-product gas stream can also contain impurites from them and their combustion products. The by-product gas stream can be used as cooling medium as described previously and/or as replacement of air (or oxygen in the case of oxyfuel mode plants) in the kiln burner.

When used as cooling medium, the by-product gas stream is mixed with bypass gas from the kiln according to the invention, typically in a mix chamber with or without additional air (or oxygen for oxyfuel mode) with the purpose of cooling the bypass gas to 100 - 300 °C. Preferably, the quenched gas is passed into a dedusting unit later for removing pollutants of cycling behavior like HCI together with the dust.

A main advantage of CCS technologies as compared to other CO₂ avoiding approaches is the lack of changes necessary to retrofit existing plants. The devices and process parameters can be kept, only the exhaust gas treatment section needs adaptation. In addition, combined with such established measures of carbon dioxide emission reduction the carbon dioxide foot print of cement manufacturing can be reduced further.

The invention will be illustrated further with reference to the attached figure, without restricting the scope to the specific embodiment described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

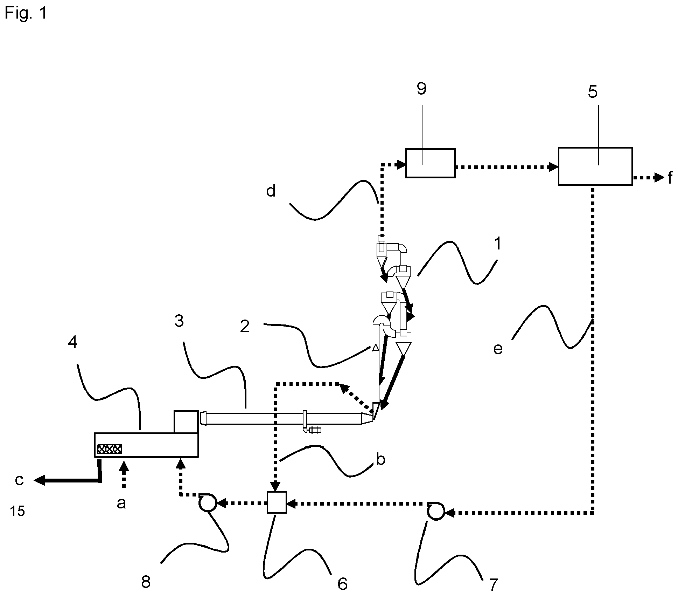

Figure 1 provides a schematic overview of a cement plant illustrating the method and cement plant according to the invention. As usual, a cyclone preheater 1, calciner 2, rotary kiln 3, and clinker cooler 4 are the main units of the cement plant. According to the invention, the cement plant also comprises a carbon dioxide purification unit 5. Gas streams are indicated with dotted lines/arrows and solids streams with solid ones. To enhance clarity many units and streams are omitted.

Thus, for the preheater 1 only the raw meal streams inside it are depicted. As known, solids are injected into gas streams which transport them to cyclones where solids sink to the bottom and gas exits at the top. The lower most cyclone forms a loop with the calciner 2, ensuring the desired degree of precalcination. The calciner burner with its fuel supply and an optional further gas supply to the calciner 2 are not shown.

The precalcined raw meal enters the rotary kiln 3 from one end, where also a part of the kiln exhaust gas is splitted off as bypass gas. The remainder enters the calciner 2 and from there the preheater 1. The precalcined raw meal is sintered to cement clinker c while passing the kiln 3 towards the cooler 4. The kiln burner with its fuel supply and an optional further gas supply to it are not shown in the figure.

Cement clinker leaves the kiln 3 and enters the cooler 4, a moving grate cooler in this example, where it is cooled with a cooling medium. The finished clinker c can be ground and/or stored in a silo.

In the embodiment shown the cooler 4 receives both air a (or oxygen for oxyfuel mode) and a mixture of bypass gas b and by-product gas stream e as cooling medium. The cooling medium is obtained by mixing bypass gas b and by-product gas stream e in a mixing unit 6. Typically, a fan 7 is used to provide the necessary draft of the by-product gas stream e. A further fan 8 ensures the cooling medium enters the clinker cooler 4 with the desired flow rate.

The carbon dioxide purification unit 5 is preceded by an exhaust gas cleaning unit 9, typically comprising one or more of a dedusting, de-NOₓ and de-SOₓ stage. De-NOₓ stage can also (partially) take place earlier when a non-catalytic removal is foreseen that needs high temperatures. A conditioning can be foreseen, but is usually not needed since conditioning is also accomplished by the carbon dioxide purification unit 5. Thus, the cleaned gas from exhaust gas cleaning unit 9 enters a carbon dioxide purification system 5, which comprises one or more of a condensation, one or several stages of compression, cooling, drying, filtering, adsorption, and distillation. Therein, an essentially pure carbon dioxide stream f is separated from the exhaust gas. Finally, essentially pure carbon dioxide f is sent to storage or utilization, respectively. The by-product gas stream e obtained concurrently is passed into the mixing unit 6 as described.

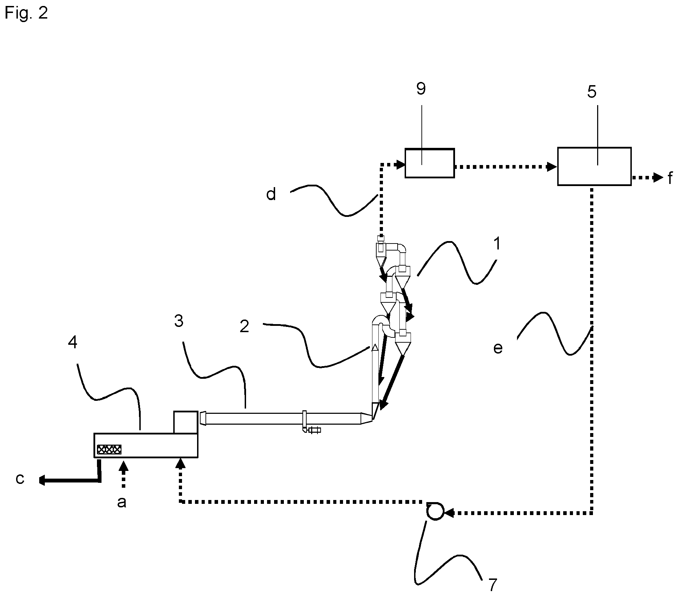

Figure 2 shows a similar plant as figure 1 except that the cooling medium is composed of air a (or oxygen/an oxygen mixture) and the by-product gas stream e without any bypass gas from the kiln. Thus, no mixing chamber and additonal fan are needed.

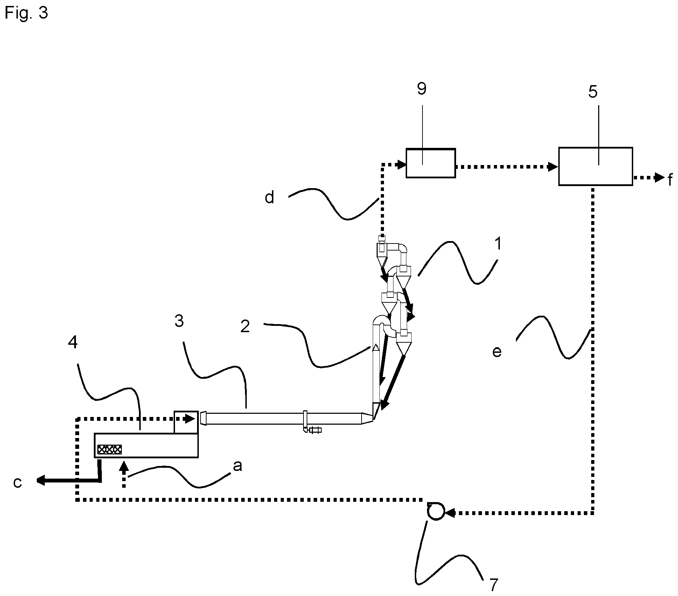

In figure 3 an embodiment using the by-product gas stream e as part of the oxidizer in the rotary kiln 3 is shown. Like in figure 2, this obviates a mixing chamber and additional fan, one fan 7 suffices to pass the by-product gas stream e to the intended part. Since together with the cooling medium there is usually sufficient oxidizer, this embodiment allows a particulary easy retrofitting of exisiting cement plants.

### List of reference numbers

- 1: preheater
- 2: calciner
- 3: rotary kiln
- 4: clinker cooler
- 5: carbon dioxide purification unit
- 5a: condenser
- 5b: absortion and desorption unit
- 6: mixing unit
- 7: fan
- 8: fan
- 9: exhaust gas cleaning unit

- a: air or oxygen or oxygen containing gas mixture
- b: bypass gas
- c: clinker
- d: gas from preheater
- e: by-product gas stream
- f: purified CO₂

## Claims

1. Method for manufacturing cement clinker comprising the steps
- providing a raw meal
- preheating the raw meal in a preheater
- calcining the preheated raw meal in a calciner
- burning the preheated, calcined raw meal in a kiln to obtain the cement clinker
- cooling the cement clinker in a clinker cooler
- separating an off-gas from the preheater into a carbon dioxide gas stream and a by-product gas stream in a CO₂ purification unit
wherein the by-product gas stream is used as cooling medium in the clinker cooler and/or as replacement of air in a kiln burner.

2. Method according to claim 1, wherein separating the off-gas from the preheater into the carbon dioxide gas stream and the by-product gas stream in the CO₂ purification unit comprises absorption of CO₂ to provide the by-product gas stream and desorption of the CO₂ to provide the carbon dioxide stream.

3. Method according to claim 2, wherein separating the off-gas from the preheater into the carbon dioxide gas stream and the by-product gas stream in the CO₂ purification unit further comprises one or more of
- removal of water through condensation by direct or indirect contact with a cooling media, typically water or air, preferably reducing a temperature by 20 - 40 °C
- compression of the gas
- inter-cooling of the gas
- distillation of the gas.

4. Method according to one of claims 1 to 3, wherein the by-product gas is used a cooling medium by
- withdrawing, as a bypass gas, part of a kiln exhaust gas
- quenching the bypass gas in a mixing unit using a quenching gas, wherein the by-product gas stream from the CO₂ purification unit forms a part or all of the the quenching gas.

5. Method according to claim 4, wherein from 2 to 8 Vol.-% of the kiln exhaust gas is withdrawn as the bypass gas.

6. Method according to claim 4 or 5, wherein the by-product gas stream is mixed with the quenching gas in a mixing unit with or without additional air, thereby cooling the bypass gas to a temperatur in the range from 100 to 300 °C.

7. Method according to one of claims 4 to 6, wherein dust and/or pollutants, specifically compounds of chloride, sulfur and/or alkali metals, in the quenched bypass gas are removed in a dedusting unit.

8. Method according to one of claims 4 to 7, wherein the kiln exhaust gas not withdrawn flows through one or more of the calciner, the preheater, a mill for grinding raw materials to provide the raw meal, and a raw material feed.

9. Method according to one of claims 4 to 8, wherein the kiln exhaust gas not withdrawn as bypass gas is dedusted and/or NO and NO₂ contained are reduced in the presence of NH₃ or a compound releasing it in a catalytic or non-catalytic reactor, and/or volatile organic compounds contained are burned down to CO₂ and/or SOₓ contained is adsorbed on the raw meal during preheating, adsorbed on a raw material when drying it and/or scrubbed from the gas with a scrubbing device.

10. Method according to one of claims 1 to 9, wherein the calciner is operated in oxyfuel mode, preferably with one part of the preheater being separated with regard to gas flow from a second part, or with two preheater strings, a first one connected to the calciner operated in oxyfuel mode and a second one connected to the kiln.

11. Cement clinker manufacturing plant comprising a preheater (1), a calciner (2), a rotary kiln (3), a clinker cooler (4), a CO₂ purification unit (5), a first gas line connecting the CO₂ purification unit (5) with a mixing unit (6) for passing a by-product gas stream from the CO₂ purification unit (5) to the mixing unit (6), means for withdrawing a part of the kiln exhaust gas as a bypass gas and a second gas line connecting the means for withdrawing with the mixing unit (6) to pass bypass gas to the mixing unit (6), wherein the mixing unit (6) is adapted to quench the bypass gas with the by-product gas stream, and wherein a third gas line connects the mixing unit (6) with the clinker cooler (4) to pass the quenched bypass gas into the clinker cooler (4) as cooling medium, preferably via a dedusting unit.

12. Cement clinker manufacturing plant comprising a preheater (1), a calciner (2), a rotary kiln (3), a clinker cooler (4), a CO₂ purification unit (5), and a gas conduit connecting the CO₂ purification unit (5) with the rotary kiln (3) for passing a by-product gas stream from the CO₂ purification unit (5) to a kiln burner as replacement of air or oxygen.

13. Cement clinker manufacturing plant according to claim 11 or 12, wherein the preheater (1) is a cyclone preheater, preferably with 2, 3, 4, 5 or 6 cyclones, most preferred 3 to 5.

14. Cement clinker manufacturing plant according to one of claims 11 to 13, wherein the CO₂ purification unit (5) comprises an absorption and desorption unit (5b) for absorbing CO₂ from an exhaust gas from the rotary kiln, calciner and/or preheater into the CO₂ purification unit (5) and for regeneration of an absorbent and releasing a carbon dioxide stream.

15. Cement clinker manufacturing plant according to claim 14, wherein the CO₂ purification unit (5) further comprises one or more of a multi-stage compression unit, a heat exchanger for inter-cooling, and a distillation unit.
